# EUROPÄISCHE PATENTSCHRIFT

(11) **EP 3 787 939 B1**
(45) Veröffentlichungstag und Bekanntmachung des Hinweises auf die Patenterteilung: **21.05.2025**
(21) Anmeldenummer: 19714558.4
(22) Anmeldetag: 19.03.2019
(51) Int. Cl.: B60T 1/00, F16D 63/00

(54) **STEUERVORRICHTUNG UND VERFAHREN ZUM BETREIBEN EINER PARKBREMSVORRICHTUNG EINES FAHRZEUGS**
VEHICLE PARK BRAKE CONTROL DEVICE AND METHOD
FREINAGE DE STATIONNENEMENT D'UN VEHICULE ET PROCEDE DE CONTROLE D'UN TEL FREINAGE

(30) Priorität: 03.05.2018 DE 102018206824
(43) Veröffentlichungstag der Anmeldung: 10.03.2021
(73) Patentinhaber: Robert Bosch GmbH, 70442 Stuttgart (DE)
(72) Erfinder: DREWE, Ingo, 23769 Fehmarn (DE); KAISERAUER, Thomas, 73732 Esslingen (DE)
(86) Internationale Anmeldenummer: PCT/EP2019/056831
(87) Internationale Veröffentlichungsnummer: WO 2019/211038

(56) Entgegenhaltungen:
- DE-A1- 102015 202 337
- US-A1- 2008 302 628
- US-A1- 2017 268 672
- US-A1- 2017 268 673
- US-B2- 8 412 422

## Beschreibung

Die Erfindung betrifft eine Steuervorrichtung für eine Parkbremsvorrichtung.

Ebenso betrifft die Erfindung Parkbremsvorrichtungen für Fahrzeuge. Des Weiteren betrifft die Erfindung ein Verfahren zum Betreiben einer Parkbremsvorrichtung eines Fahrzeugs.

### Stand der Technik

In der DE 10 2014 207 997 A1 ist ein Steuergerät für eine Parksperre beschrieben, welches dazu ausgelegt ist, bei einer Betätigung eines Wählhebels oder eines Bremspedals durch einen Fahrer des mit der Parksperre ausgestatteten Fahrzeugs einen Parksperrenaktor der Parksperre so zu aktivieren, dass der Parksperrenaktor durch Verschwenken einer Parksperrenklinke diese in Formschluss mit einem Parksperrenrad der Parksperre bringt.

Aus der US 2017/0268672 A1 ist eine Parksperrenvorrichtung mit einem Parkzahnrad und einer Parksperrklinke, die mit dem Parkzahnrad in Eingriff bringbar ist und von diesem gelöst werden kann, sowie einem Schieber, der umschaltbar ist zwischen einem eingerückten Zustand, bei dem die Parksperrklinke mit dem Parkzahnrad im Eingriff ist, und einem ausgerückten Zustand, bei dem die Parksperrklinke außer Eingriff mit dem Parkzahnrad ist, und ein Hydrauliksystem, das den Schieber steuert.

### Offenbarung der Erfindung

Die vorliegende Erfindung schafft eine Steuervorrichtung für eine Parkbremsvorrichtung mit den Merkmalen des Anspruchs 1.

### Vorteile der Erfindung

Die vorliegende Erfindung schafft Möglichkeiten zum verlässlichen Arretieren eines Fahrzeugs/Kraftfahrzeugs in seiner aktuellen Parkposition bei einem unerwarteten/plötzlichen Ausfall eines Stromversorgungssystems des jeweiligen Fahrzeugs während eines Vorgangs zum Abstellen/Parken des Fahrzeugs. Damit ist auch in einer derartigen Situation ein sicheres Abstellen des Fahrzeugs mit einem minimierten Wegrollrisiko (von nahezu null) gewährleistet. Selbst wenn aufgrund des Ausfalls des Stromversorgungssystems des Fahrzeugs der bereits begonnene Vorgang zum Abstellen/Parken des Fahrzeugs nicht beendet werden konnte, muss bei einer Nutzung der vorliegenden Erfindung kein Wegrollen des Fahrzeugs befürchtet werden. Insbesondere ist bei einer Nutzung der vorliegenden Erfindung das Wegrollen des Fahrzeugs auch dann nicht zu befürchten, wenn ein zum Zeitpunkt des Ausfalls des Stromversorgungssystems in dem Fahrzeug anwesender Fahrer eine Bremsbetätigung vergisst. Die vorliegende Erfindung steigert damit einen Fahrerkomfort und einen Sicherheitsstandard des zu ihrer Realisierung eingesetzten Fahrzeugs.

Es wird außerdem darauf hingewiesen, dass die vorliegende Erfindung zusätzlich Möglichkeiten zum sicheren Abstellen/Parken eines autonom fahrenden Fahrzeugs bei einem Ausfall seines Stromversorgungssystems schafft, obwohl in diesem Fall häufig kein Fahrer anwesend ist. Die vorliegende Erfindung trägt damit auch zur Steigerung eines Sicherheitsstandards von autonom fahrenden Fahrzeugen bei.

In einer vorteilhaften Ausführungsform umfasst die Steuervorrichtung einen Notenergiespeicher, und die Elektronikeinrichtung ist dazu ausgelegt, eine auf dem Notenergiespeicher abgespeicherte Energie als das mindestens eine Aktivierungssignal an die Auslöseeinrichtung der Parkbremsvorrichtung auszugeben. Da die zum Aktivieren der Auslöseeinrichtung ausreichende Energiemenge in der Regel mittels eines vergleichsweise kostengünstigen und wenig Bauraum benötigenden Notenergiespeichers, wie beispielsweise einem Speicherkondensator, speicherbar ist, führt eine derartige Ausbildung der Steuervorrichtdung kaum zur Steigerung von deren Bauraumbedarf oder von deren Kosten. Gleichzeitig ist bei dieser Ausführungsform der Steuervorrichtung verlässlich gewährleistet, dass trotz eines unerwarteten/plötzlichen Ausfalls des Stromversorgungssystems des jeweiligen Fahrzeugs noch ausreichend Energie zum Überführen der Parkbremsvorrichtung in ihren Arretiermodus vorliegt.

In einer alternativen Ausführungsform der Steuervorrichtung kann die Elektronikeinrichtung dazu ausgelegt sein, mindestens ein Schaltsignal als das mindestens eine Aktivierungssignal so an mindestens einen Schalter der Auslöseeinrichtung auszugeben, dass eine Elektronik der Auslöseeinrichtung über den mittels des mindestens einen Schaltsignals geschalteten Schalter von einem Energiespeicher der Auslöseeinrichtung mit Strom versorgbar ist. Auch in diesem Fall ist eine ausreichende Energieversorgung der Auslöseeinrichtung zum Überführen der Parkbremsvorrichtung in ihren Arretiermodus verlässlich gewährleistet.

Die vorausgehend beschriebenen Vorteile der Ausführungsformen der Steuervorrichtung sind auch bei einer Parkbremsvorrichtung für ein Fahrzeug zum Zusammenwirken mit einer derartigen Steuervorrichtung oder bei einer Parkbremsvorrichtung für ein Fahrzeug mit einer entsprechenden Steuervorrichtung gewährleistet. In beiden Fällen umfasst die Parkbremsvorrichtung die Auslöseeinrichtung, welche mittels des mindestens einen von der Steuervorrichtung ausgegebenen Aktivierungssignals aktivierbar ist, wobei die Parkbremsvorrichtung derart ausgebildet ist, dass die Parkbremsvorrichtung mittels der aktivierten Auslöseeinrichtung in ihren Arretiermodus überführbar ist, sodass das Fahrzeug mittels der in ihrem Arretiermodus vorliegenden Parkbremsvorrichtung in seiner aktuellen Parkposition arretiert ist.

Vorzugsweise weist die Parkbremsvorrichtung als ihre Auslöseeinrichtung eine pyrotechnische oder elektromagnetische Auslöseeinrichtung und ein Verstellelement auf, wobei das Verstellelement mittels einer Aktivierung der pyrotechnischen oder elektromagnetischen Auslöseeinrichtung aus einer Ausgangsstellung in eine Wirkstellung derart verstellbar ist, dass die Parkbremsvorrichtung bei einem Vorliegen des Verstellelements in seiner Wirkstellung in ihrem Arretiermodus vorliegt. Die hier beschriebene Ausbildung der Parkbremsvorrichtung mit der pyrotechnischen oder elektromagnetischen Auslöseeinrichtung und dem Verstellelement stellt sicher, dass bereits eine vergleichsweise geringe Energiemenge ausreichend zum Überführen der Parkbremsvorrichtung in ihren Arretiermodus ist.

Beispielsweise kann die Parkbremsvorrichtung eine verstellbare Klinke, ein Sperrrad und mindestens eine Feder umfassen, wobei die verstellbare Klinke mittels des in seiner Ausgangsstellung vorliegenden Verstellelements entgegen einer Kraft der mindestens einen Feder in einer Wartestellung beabstandet von dem Sperrrad haltbar ist, und wobei die verstellbare Klinke bei einem Vorliegen des Verstellelements in seiner Wirkstellung mittels der Kraft der mindestens einen Feder in eine Sperrstellung gegen das Sperrrad so drückbar ist, dass die Parkbremsvorrichtung in ihrem Arretiermodus vorliegt. Das hier beschriebene Zusammenwirken von verstellbarer Klinke, Sperrrad, der mindestens einen Feder und dem Verstellelement ist mechanisch leicht und kostengünstig ausbildbar.

Alternativ kann die Parkbremsvorrichtung auch eine verstellbare Klinke und ein Sperrrad umfassen, wobei die verstellbare Klinke bei einem Vorliegen des Verstellelements in seiner Ausgangsstellung in einer Wartestellung beabstandet von dem Sperrrad vorliegt, und wobei die verstellbare Klinke mittels des in seiner Wirkstellung vorliegenden Verstellelements in eine Sperrstellung gegen das Sperrrad so drückbar ist, dass die Parkbremsvorrichtung in ihrem Arretiermodus vorliegt. Auch diese Ausführungsform der Parkbremsvorrichtung ist vergleichsweise einfach und kostengünstig herstellbar.

Die Parkbremsvorrichtung kann beispielsweise eine Parksperre oder eine elektrische Parkbremse sein. Die vorliegende Erfindung kann somit für eine Vielzahl von vorteilhaft eingesetzten Fahrzeugkomponenten zum Unterbinden eines unerwünschten Wegrollens des jeweils damit ausgestatteten Fahrzeugs genutzt werden. Es wird jedoch darauf hingewiesen, dass die hier genannten Beispiele für die Parkbremsvorrichtung nicht einschränkend zu verstehen sind.

Des Weiteren schafft auch ein Ausführen eines korrespondierenden Verfahrens zum Betreiben einer Parkbremsvorrichtung eines Fahrzeugs die oben schon aufgezählten Vorteile. Es wird ausdrücklich darauf hingewiesen, dass das Verfahren zum Betreiben einer Parkbremsvorrichtung eines Fahrzeugs gemäß den oben erläuterten Ausführungsformen der Steuervorrichtung und der Parkbremsvorrichtungen weiterbildbar ist.

### Kurze Beschreibung der Zeichnungen

Weitere Merkmale und Vorteile der vorliegenden Erfindung werden nachfolgend anhand der Figuren erläutert. Es zeigen:
- Fig. 1: eine schematische Darstellung einer ersten Ausführungsform der Steuervorrichtung, bzw. einer ersten Ausführungsform einer damit zusammenwirkenden oder ausgestatteten Parkbremsvorrichtung;
- Fig. 2: eine schematische Darstellung einer zweiten Ausführungsform der Steuervorrichtung, bzw. einer zweiten Ausführungsform einer damit zusammenwirkenden oder ausgestatteten Parkbremsvorrichtung;
- Fig. 3: eine schematische Darstellung einer dritten Ausführungsform der Steuervorrichtung, bzw. einer dritten Ausführungsform einer damit zusammenwirkenden oder ausgestatteten Parkbremsvorrichtung;
- Fig. 4: eine schematische Darstellung einer vierten Ausführungsform der Steuervorrichtung, bzw. einer vierten Ausführungsform einer damit zusammenwirkenden oder ausgestatteten Parkbremsvorrichtung; und
- Fig. 5: ein Flussdiagramm zum Erläutern einer Ausführungsform des Verfahrens zum Betreiben einer Parkbremsvorrichtung eines Fahrzeugs.

### Ausführungsformen der Erfindung

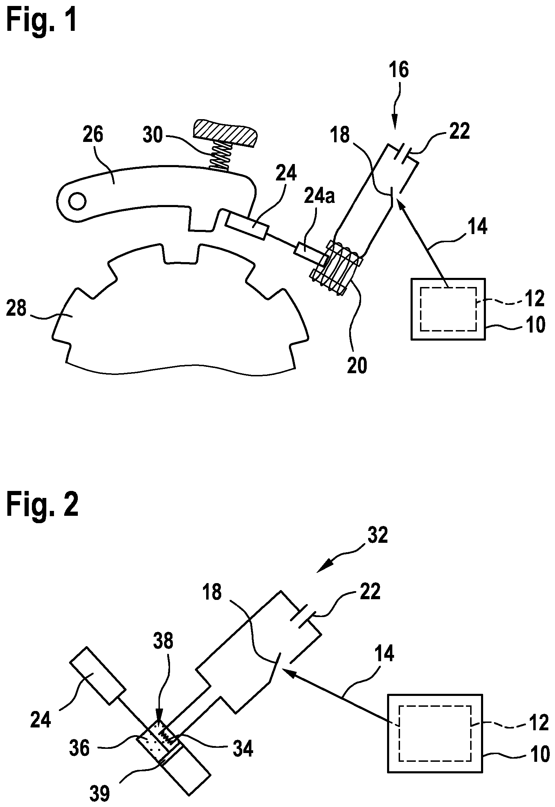

Fig. 1 zeigt eine schematische Darstellung einer ersten Ausführungsform der Steuervorrichtung, bzw. einer ersten Ausführungsform einer damit zusammenwirkenden oder ausgestatteten Parkbremsvorrichtung.

Die in Fig. 1 schematisch dargestellte Steuervorrichtung 10, bzw. die damit zusammenwirkende oder ausgestattete Parkbremsvorrichtung, kann in einer Vielzahl von Fahrzeugtypen/Kraftfahrzeugtypen eingesetzt werden. Auch wenn eine Nutzung der Steuervorrichtung 10 speziell für ein zum autonomen Fahren ausgelegtes Fahrzeug/Kraftfahrzeug besonders vorteilhaft ist, ist die Steuervorrichtung 10 dennoch in jedem weiteren Fahrzeugtyp/Kraftfahrzeugtyp vorteilhaft einsetzbar.

Die Steuervorrichtung 10 weist eine Elektronikeinrichtung 12 auf, mittels welcher ein Ausfall eines (nicht dargestellten) Stromversorgungssystems eines mit der Steuervorrichtung 10 und der Parkbremsvorrichtung ausgestatteten Fahrzeugs während eines Vorgangs zum Abstellen/Parken des Fahrzeugs erkennbar ist. Unter dem Ausfall des Stromversorgungssystems des jeweiligen Fahrzeugs kann beispielsweise ein Ausfall eines Niederspannungsbordnetzes des jeweiligen Fahrzeugs verstanden werden. Da Möglichkeiten zum Erkennen einer derartigen Situation aus dem Stand der Technik bereits bekannt sind, wird hier nicht genauer darauf eingegangen. Beispielsweise kann die Elektronikeinrichtung 12 mittels mindestens einer Spannungsmesseinrichtung gegebenenfalls erkennen, dass eine bereitgestellte Niedervoltspannung unter einen vorgegebenen Schwellwert fällt.

Die Elektronikeinrichtung 12 ist bei einem Ausfall des Stromversorgungssystems während eines Vorgangs zum Abstellen/Parken des Fahrzeugs dazu ausgelegt, mindestens ein Aktivierungssignal 14 so an eine Auslöseeinrichtung 16 der Parkbremsvorrichtung auszugeben, dass die Auslöseeinrichtung 16 mittels des mindestens einen Aktivierungssignals 14 aktivierbar ist/aktiviert wird. Dazu ist die Auslöseeinrichtung 16 derart ausgebildet, dass die Auslöseeinrichtung 16 mittels des mindestens einen von der Steuervorrichtung 10 ausgegebenen Aktivierungssignals 14 aktivierbar ist/aktiviert wird. Außerdem ist die unten genauer beschriebene Parkbremsvorrichtung derart ausgebildet, dass die Parkbremsvorrichtung mittels der aktivierten Auslöseeinrichtung 16 in einen sogenannten Arretiermodus überführbar ist/überführt wird. Wie nachfolgend ebenfalls genauer erläutert wird, ist mittels der Ausbildung der Parkbremsvorrichtung sichergestellt, dass das Fahrzeug mittels der in ihrem Arretiermodus vorliegenden Parkbremsvorrichtung in seiner aktuellen Parkposition arretiert ist/gehalten wird. Damit stellt die Steuervorrichtung 10 sicher, dass das Fahrzeug bei einem Ausfall seines Stromversorgungssystems während eines Vorgangs zum Abstellen/Parken des Fahrzeugs mittels der Parkbremsvorrichtung in seiner aktuellen Parkposition arretiert wird.

Die Steuervorrichtung 10 und die damit zusammenwirkende oder ausgestattete Parkbremsvorrichtung gewährleisten somit, dass das Fahrzeug selbst bei einem unerwarteten/plötzlichen Ausfall seines Stromversorgungssystems während eines Vorgangs zum Abstellen/Parken des Fahrzeugs in der jeweiligen Parkposition so arretiert ist/wird, dass selbst auf einer Standfläche mit einer signifikanten Steigung ein unerwünschtes Wegrollen des Fahrzeugs nicht befürchtet werden muss. Aufgrund der vorteilhaften Auslegung der Steuervorrichtung 10 ist dieser Vorteil auch dann gewährleistet, wenn der Ausfall des Stromversorgungssystems während eines Vorgangs zum Abstellen/Parken des zuvor autonom fahrenden und fahrerlosen Fahrzeugs erfolgt. Demgegenüber muss selbst bei einer Entladung eines als Stromversorgungssystem eingesetzten Niederspannungsbordnetzes des bereits geparkten Fahrzeugs kein Aktivieren der Auslöseeinrichtung 16, und damit auch kein unerwünschtes Überführen der Parkbremsvorrichtung in ihren Arretiermodus befürchtet werden. Stattdessen kann in einer derartigen Situation das Fahrzeug beispielsweise mittels eines herkömmlichen Parkhaltesystems abgesichert sein.

In der Ausführungsform der Fig. 1 ist die Elektronikeinrichtung 12 der Steuervorrichtung 10 dazu ausgelegt, mindestens ein Schaltsignal 14 als das mindestens eine Aktivierungssignal 14 so an mindestens einen Schalter 18 der Auslöseeinrichtung 16 auszugeben, was eine Elektronik 20 der Auslöseeinrichtung 16 über den mittels des mindestens einen Schaltsignals 14 geschalteten Schalter 18 von einem (eigenen) Energiespeicher 22 der Auslöseeinrichtung 16 mit Strom versorgbar/versorgt ist. Damit ist selbst bei einem Ausfall des Stromversorgungssystems noch eine ausreichende Stromversorgung zum Aktivieren der Auslöseeinrichtung 16 und zum Überführen der Parkbremsvorrichtung in ihren Arretiermodus gewährleistet. Als Energiespeicher 22 der Auslöseeinrichtung 16 kann beispielsweise mindestens ein Speicherkondensator 22 eingesetzt sein. Ein derartiger Energiespeicher 22 ist vergleichsweise kostengünstig und benötigt relativ wenig Bauraum. Der mindestens eine Speicherkondensator 22 kann bei jedem Fahrtbeginn des Fahrzeugs von seinem Stromversorgungsnetz mit einer zum Auslösen der Auslöseeinrichtung 16 ausreichenden Auslöseenergie aufgeladen werden. Auch für diesen Verwendungszweck eignet sich das Niederspannungsbordnetz gut. Es wird jedoch darauf hingewiesen, dass der in Fig. 1 dargestellte Speicherkondensator 22 nur als Beispiel für den Energiespeicher 22 der Auslöseeinrichtung 16 zu interpretieren ist. Andere Energiespeichertypen können ebenfalls für die Auslöseeinrichtung 16 genutzt werden.

Als Alternative zu der Ausbildung der Auslöseeinrichtung 16 mit dem eigenen Energiespeicher 22 kann auch die Steuervorrichtung 10 einen (nicht skizzierten) Notenergiespeicher umfassen. In diesem Fall ist die Elektronikeinrichtung 12 vorzugsweise dazu ausgelegt, eine auf dem Notenergiespeicher abgespeicherte Energie als das mindestens eine Aktivierungssignal 14 an die Auslöseeinrichtung 16 der Parkbremsvorrichtung auszugeben. Auch auf diese Weise ist sicherstellbar, dass gerade bei einem Ausfall des Stromversorgungssystems des Fahrzeugs während eines Vorgangs zum Abstellen des Fahrzeugs noch eine ausreichende Energieversorgung der Auslöseeinrichtung 16 zum Aktivieren der Auslöseeinrichtung 16 und zum Überführen der Parkbremsvorrichtung in ihren Arretiermodus sichergestellt ist.

In der Ausführungsform der Fig. 1 ist die Auslöseeinrichtung 16 eine elektromagnetische Auslöseeinrichtung 16 mit einer Magnetspule 20 als zumindest Teil ihrer Elektronik 20. Mittels eines Bestromens der Magnetspule 20 ist/wird ein Magnetfeld bewirkbar/bewirkt. Außerdem weist die in Fig. 1 schematisch wiedergegebene Parkbremsvorrichtung ein Verstellelement 24 auf, wobei das Verstellelement 24 derart an der Auslöseeinrichtung 16 angeordnet ist, dass das Verstellelement 24 mittels einer Aktivierung der Auslöseeinrichtung 16 aus einer (in Fig. 1 dargestellten) Ausgangsstellung in eine Wirkstellung verstellbar ist/verstellt wird. Bei der bildlich wiedergegebenen Ausführungsform der Fig. 1 kann das Verstellelement 24 mittels des durch Bestromen der Magnetspule 20 erzeugten Magnetfelds beispielhaft aus seiner Ausgangsstellung in seine Wirkstellung gezogen werden. Insbesondere kann das Verstellelement 24 in seiner Wirkstellung zumindest teilweise in ein von der Magnetspule 20 umgebendes Innenvolumen hineinragen. Sofern gewünscht, kann zumindest ein Teil 24a des Verstellelements 24 magnetisiert sein. Außerdem ist die Parkbremsvorrichtung derart ausgebildet, dass die Parkbremsvorrichtung bei einem Vorliegen des Verstellelements 24 in seiner Wirkstellung in ihrem Arretiermodus vorliegt.

In dem Beispiel der Fig. 1 umfasst die Parkbremsvorrichtung auch eine verstellbare Klinke 26, ein Sperrrad 28 und mindestens eine Feder 30. Die mindestens eine Feder 30 kann mindestens eine Druckfeder 30 und/oder mindestens eine Zugfeder sein. Insbesondere kann mindestens eine vorgespannte Feder 30 als die mindestens eine Feder 30 eingesetzt sein. Die verstellbare Klinke 26 ist/wird mittels des in seiner Ausgangsstellung vorliegenden Verstellelements 24 entgegen einer Kraft der mindestens einen Feder 30 in einer Wartestellung beabstandet von dem Sperrrad 28 haltbar/gehalten. Das Verstellelement 24 fungiert somit als sogenanntes "Halteelement". Bei einem Vorliegen des Verstellelements 24 in seiner Wirkstellung hingegen, ist/wird die verstellbare Klinke 26 mittels der Kraft der mindestens einen Feder 30 so in eine Sperrstellung gegen das Sperrrad 28 drückbar/gedrückt, dass die Parkbremsvorrichtung in ihrem Arretiermodus vorliegt. Auch die mindestens eine Feder 30 kann somit als "Kraftspeicher" dazu genutzt werden, bei einem Ausfall des Stromversorgungssystems des Fahrzeugs ein formschlüssiges Verrasten der verstellbaren Klinke 26 in ihrer Sperrstellung an dem Sperrrad 28 zu bewirken.

Nach einem Überführen der Parkbremsvorrichtung der Fig. 1 in ihren Arretiermodus durch Verrasten der verstellbaren Klinke 26 an dem Sperrrad 28 ist das mit der Parkbremsvorrichtung ausgestattete Fahrzeug nicht mehr fahrbereit. Ein Wegrollen des Fahrzeugs muss vor einem Lösen der verstellbaren Klinke 26 von dem Sperrrad 28 nicht befürchtet werden. Eine Reaktivierung der Parkbremsvorrichtung durch Lösen der verstellbaren Klinke 26 von dem Sperrrad 28 kann von einer Werkstatt ausgeführt werden. Da das Überführen der Parkbremsvorrichtung in ihren Arretiermodus mit einer relativ geringen Häufigkeit erfolgt, ist die Hilfe der Werkstatt zum Lösen der verstellbaren Klinke 26 von dem Sperrrad 28 nur vergleichsweise selten nötig.

Fig. 2 zeigt eine schematische Darstellung einer zweiten Ausführungsform der Steuervorrichtung, bzw. einer zweiten Ausführungsform einer damit zusammenwirkenden oder ausgestatteten Parkbremsvorrichtung.

Die in Fig. 2 schematisch teilweise wiedergegebene Parkbremsvorrichtung unterscheidet sich von der zuvor beschriebenen Ausführungsform darin, dass die Parkbremsvorrichtung der Fig. 2 eine pyrotechnische Auslöseeinrichtung 32 aufweist. Die pyrotechnische Auslöseeinrichtung 32 weist als zumindest Teil ihrer Elektronik 34 eine Zündspule 34 auf, wobei mittels eines Bestromens der Zündspule 34 Funken/Zündfunken erzeugbar sind/erzeugt werden. Mittels der auf diese Weise erzeugten Funken kann ein Zündstoff 36, welcher in einem Reaktionsvolumen 38 der Auslöseeinrichtung 32 vorliegt, zur Explosion gebracht werden. Das Reaktionsvolumen 38 wird von einem verstellbaren Kolben 39 begrenzt, wobei eine mittels der Explosion des Zündstoffs 36 bewirkter Drucksteigerung ausreichend zum Verstellen des verstellbaren Kolbens 39 ist.

Bei der Parkbremsvorrichtung der Fig. 2 ist das oben schon beschriebene Verstellelement 24 derart an dem verstellbaren Kolben 39 angebunden, dass das Verstellelement 24 mittels der durch die Explosion des Zündstoffs 36 ausgelösten Verstellbewegung des verstellbaren Kolbens 39 aus seiner Ausgangsstellung in seine Wirkstellung verstellbar ist/verstellt wird. Damit kann auch das in Fig. 2 dargestellte Verstellelement 24 als sogenanntes "Halteelement" mit den nicht dargestellten Komponenten 26 bis 30 seiner Parkbremsvorrichtung so zusammenwirken, dass mittels des Bestromens der Zündspule 34 eine Kettenreaktion zum Überführen der Parkbremsvorrichtung in ihren Arretiermodus auslösbar ist. Die Kraft der mindestens einen Feder 30 bewirkt dann ein verlässliches Halten der verstellbaren Klinke 26 in ihrer Sperrposition, bzw. ein verlässliches Verrasten der verstellbaren Klinke 26 in einer Sperrradöffnung des Sperrrades 28.

Bezüglich weiterer Komponenten der Parkbremsvorrichtung der Fig. 2 wird auf die zuvor beschriebene Ausführungsform verwiesen.

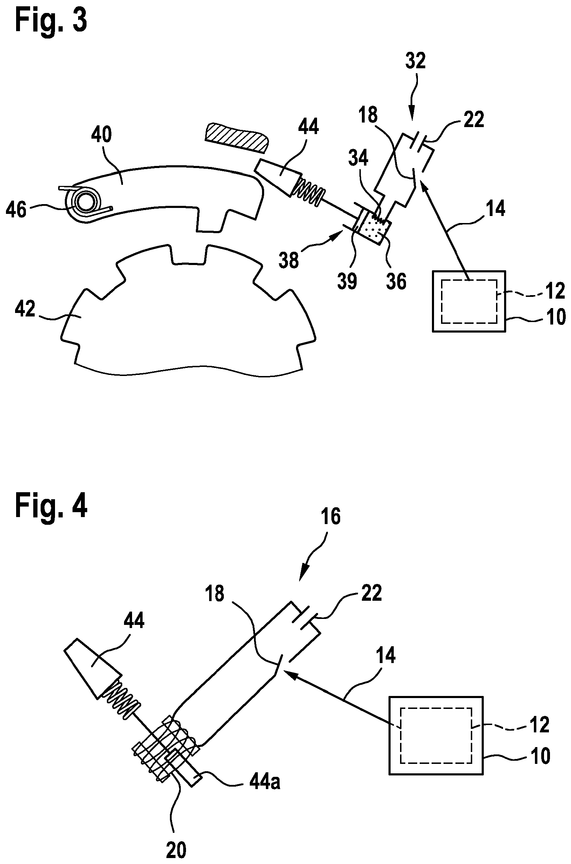

Fig. 3 zeigt eine schematische Darstellung einer dritten Ausführungsform der Steuervorrichtung, bzw. einer dritten Ausführungsform einer damit zusammenwirkenden oder ausgestatteten Parkbremsvorrichtung.

Auch die in Fig. 3 schematisch dargestellte Parkbremsvorrichtung weist eine verstellbare Klinke 40 und ein Sperrrad 42 auf. Bei einem Vorliegen des als "Keilelement" ausgelegten Verstellelements 44 in seiner Ausgangsstellung liegt die verstellbare Klinke 40 allerdings in einer sogenannten Wartestellung beabstandet von dem Sperrrad 42 vor. Beispielsweise kann, solange das Verstellelements 44 in seiner Ausgangsstellung vorliegt, die verstellbare Klinke 40 mittels mindestens einer Feder 46, wie insbesondere mindestens einer Drehfeder 46, von dem Sperrrad 42 weg gehalten sein. Vorzugsweise kontaktiert das in seiner Ausgangsstellung vorliegende Verstellelement 44 die verstellbare Klinke nicht.

Auch bei der Parkbremsvorrichtung der Fig. 3 ist das Verstellelement 44 mittels einer Explosion des in das Reaktionsvolumen 38 eingefüllten Zündstoffs 36 durch die von der Zündspule 34 erzeugten Funken aus seiner Ausgangsstellung in seine Wirkstellung verstellbar. Erst mittels des in seiner Wirkstellung vorliegenden Verstellelements 44 ist/wird die verstellbare Klinke 40 in eine Sperrstellung gegen das Sperrrad 42 so drückbar/gedrückt, dass die Parkbremsvorrichtung in ihrem Arretiermodus vorliegt. Beispielsweise kann das in seine Wirkstellung verstellte Verstellelement 44 als "Keilelement" die verstellbare Klinke 40 so kontaktieren, dass die verstellbare Klinke 40 entgegen einer Kraft der mindestens einen Feder 46 gegen das Sperrrad 42 gedrückt wird. Sobald die verstellbare Klinke 40 über einer in dem Sperrrad 42 ausgebildeten Sperrradöffnung steht, wird die verstellbare Klinke 40 durch den mittels des Verstellelements 40 darauf ausgedrückten Druck in die Sperrradöffnung geschoben und verrastet an dem Sperrrad 42.

Bezüglich weiterer Komponenten der Parkbremsvorrichtung der Fig. 3 wird auf die zuvor beschriebenen Ausführungsformen verwiesen.

Fig. 4 zeigt eine schematische Darstellung einer vierten Ausführungsform der Steuervorrichtung, bzw. einer vierten Ausführungsform einer damit zusammenwirkenden oder ausgestatteten Parkbremsvorrichtung.

Bei der Ausführungsform der Fig. 4 kann das als "Keilelement" ausgebildete Verstellelement 44 mittels des durch Bestromen der Magnetspule 20 erzeugten Magnetfelds aus seiner Ausgangsstellung in seine Wirkstellung gezogen werden. Insbesondere kann das Verstellelement 24 in seiner Wirkstellung zumindest teilweise in ein von der Magnetspule 20 umgebendes Innenvolumen hineinragen. Speziell kann ein Teil 44a des Verstellelements 44 magnetisiert sein.

Mittels des in seiner Wirkstellung vorliegenden Verstellelements 44 ist/wird die (nicht gezeigte) verstellbare Klinke 40 so in eine Sperrstellung gegen das (nicht skizzierte) Sperrrad 42 drückbar/gedrückt, dass die verstellbare Klinke 40 durch den mittels des Verstellelements 40 darauf ausgedrückten Druck in die Sperrradöffnung geschoben und an dem Sperrrad 42 verrastet wird. Damit bewirkt auch die Parkbremsvorrichtung der Fig. 4 die Vorteile der zuvor beschriebenen Ausführungsformen.

Weitere Komponenten der Parkbremsvorrichtung der Fig. 4 sind bereits mit Bezug auf die zuvor beschriebenen Ausführungsformen beschrieben.

In allen oben beschriebenen Ausführungsformen der Parkbremsvorrichtung kann die Steuervorrichtung 10 in die jeweilige Parkbremsvorrichtung integriert sein. Die Steuervorrichtung 10 kann jedoch auch ein von der jeweils dargestellten Parkbremsvorrichtung getrennt ausgebildetes Bauteil sein, welches mit der jeweiligen Parkbremsvorrichtung zusammenwirkt.

In den oben erläuterten Ausführungsformen der Parkbremsvorrichtung ist die Parkbremsvorrichtung jeweils eine Parksperre. Insbesondere kann bei der jeweiligen Parksperre das Sperrrad 28 oder 42 an einem Getriebe eines Verbrennungsmotors und/oder eines elektrischen Antriebsmotors des jeweiligen Fahrzeugs oder an mindestens einem Rad des jeweiligen Fahrzeugs verbaut sein. In beiden Fällen kann das Fahrzeug mittels eines Verrastens der verstellbaren Klinke (26 oder 40 an dem zugeordneten Sperrrad 28 oder 42 selbst auf einer Standfläche mit einer signifikanten Steigung verlässlich gehalten werden. Alternativ kann jede der oben beschriebenen Parkbremsvorrichtungen jedoch auch eine elektrische Parkbremse sein.

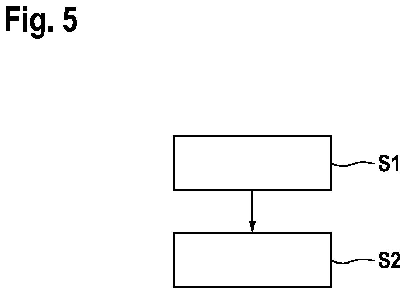

Fig. 5 zeigt ein Flussdiagramm zum Erläutern einer Ausführungsform des Verfahrens zum Betreiben einer Parkbremsvorrichtung eines Fahrzeugs.

Als Verfahrensschritt S1 wird ermittelt, ob während eines Vorgangs zum Abstellen des Fahrzeugs ein Stromversorgungssystem des Fahrzeugs ausfällt. Beispielsweise kann der Verfahrensschritt S1 wiederholt während eines Vorgangs zum Abstellen des Fahrzeugs ausgeführt werden, indem fortlaufend eine von dem Stromversorgungssystem bereitstellbare Spannung, wie z.B. eine Niedervoltspannung, mittels mindestens einer Spannungsmesseinrichtung gemessen und mit einem vorgegebenen Schwellwert verglichen wird.

Sofern in dem Verfahrensschritt S1 festgestellt wird, dass das Stromversorgungssystem des Fahrzeugs während eines Vorgangs zum Abstellen des Fahrzeugs ausgefällt, beispielsweise weil die gemessene Spannung unter dem vorgegebenen Schwellwert fällt, wird ein Verfahrensschritt S2 ausgeführt. In dem Verfahrensschritt S2 wird eine Auslöseeinrichtung der Parkbremsvorrichtung so aktiviert, dass die aktivierte Auslöseeinrichtung die Parkbremsvorrichtung in einen Arretiermodus überführt, so dass das stillstehende Fahrzeug mittels der in ihrem Arretiermodus vorliegenden Parkbremsvorrichtung arretiert wird.

Zum Ausführen des hier beschriebenen Verfahrens können alle oben erläuterten Parkbremsvorrichtungen verwendet werden. Eine Ausführbarkeit des Verfahrens ist jedoch nicht auf eine Verwendung einer dieser Parkbremsvorrichtungen beschränkt.

## Patentansprüche

1. Parkbremsvorrichtung für ein Fahrzeug mit:
einer Steuervorrichtung (10), wobei die Steuereinrichtung (10) eine Elektronikeinrichtung (12) aufweist, mittels welcher bei einem Ausfall eines Stromversorgungssystems eines mit der Steuervorrichtung (10) und der Parkbremsvorrichtung ausgestatteten Fahrzeugs während eines Vorgangs zum Abstellen des Fahrzeugs mindestens ein Aktivierungssignal (14) so an eine Auslöseeinrichtung (16, 32) der Parkbremsvorrichtung ausgebbar ist, dass die Auslöseeinrichtung (16, 32) mittels des mindestens einen Aktivierungssignals (14) aktivierbar und die Parkbremsvorrichtung mittels der aktivierten Auslöseeinrichtung (16, 32) in einen Arretiermodus überführbar ist,
der Auslöseeinrichtung (16, 32), welche mittels des mindestens einen von der Steuervorrichtung (10) ausgegebenen Aktivierungssignals (14) aktivierbar ist,
wobei die Parkbremsvorrichtung derart ausgebildet ist, dass die Parkbremsvorrichtung mittels der aktivierten Auslöseeinrichtung (16, 32) in ihren Arretiermodus überführbar ist, so dass das Fahrzeug mittels der in ihrem Arretiermodus vorliegenden Parkbremsvorrichtung in seiner aktuellen Parkposition arretiert ist,
wobei die Parkbremsvorrichtung ein Verstellelement (24, 44) aufweist, und wobei das Verstellelement (24, 44) derart an der Auslöseeinrichtung (16, 32) angeordnet ist, dass das Verstellelement (24, 44) mittels einer Aktivierung der Auslöseeinrichtung (16, 32) aus einer Ausgangsstellung in eine Wirkstellung derart verstellbar ist, dass die Parkbremsvorrichtung bei einem Vorliegen des Verstellelements (24, 44) in seiner Wirkstellung in ihrem Arretiermodus vorliegt, wobei die Parkbremsvorrichtung eine verstellbare Klinke (26), ein Sperrrad (28) und mindestens eine Feder (30) umfasst,
**dadurch gekennzeichnet, dass** die Parkbremsvorrichtung als ihre Auslöseeinrichtung (16, 32) eine pyrotechnische Auslöseeinrichtung (16, 32) aufweist und dass die verstellbare Klinke (26) mittels des in seiner Ausgangsstellung vorliegenden Verstellelements (24) entgegen einer Kraft der mindestens einen Feder (30) in einer Wartestellung beabstandet von dem Sperrrad (28) haltbar ist, und wobei die verstellbare Klinke (26) bei einem Vorliegen des Verstellelements (24) in seiner Wirkstellung mittels der Kraft der mindestens einen Feder (30) in eine Sperrstellung gegen das Sperrrad (28) so drückbar ist, dass die Parkbremsvorrichtung in ihrem Arretiermodus vorliegt.

2. Parkbremsvorrichtung nach Anspruch 1, wobei die Steuervorrichtung (10) einen Notenergiespeicher umfasst, und die Elektronikeinrichtung (12) dazu ausgelegt ist, eine auf dem Notenergiespeicher abgespeicherte Energie als das mindestens eine Aktivierungssignal an die Auslöseeinrichtung (16, 32) der Parkbremsvorrichtung auszugeben.

3. Parkbremsvorrichtung nach Anspruch 1, wobei die Elektronikeinrichtung (12) dazu ausgelegt ist, mindestens ein Schaltsignal (14) als das mindestens eine Aktivierungssignal (14) so an mindestens einen Schalter (18) der Auslöseeinrichtung (16, 32) auszugeben, dass eine Elektronik (20, 34) der Auslöseeinrichtung (16, 32) über den mittels des mindestens einen Schaltsignals (14) geschalteten Schalter (18) von einem Energiespeicher (22) der Auslöseeinrichtung (16, 32) mit Strom versorgbar ist.

4. Parkbremsvorrichtung nach einem der Ansprüche 1 bis 3, wobei die Parkbremsvorrichtung eine Parksperre oder eine elektrische Parkbremse ist.

## Claims

1. Parking brake device for a vehicle, having:
a control device (10), wherein the control apparatus (10) has an electronic apparatus (12), by means of which, in the event of a failure of a power supply system of a vehicle equipped with the control device (10) and the parking brake device during an operation for shutting down the vehicle, at least one activation signal (14) may be output to a triggering apparatus (16, 32) of the parking brake device in such a way that the triggering apparatus (16, 32) may be activated by means of the at least one activation signal (14) and the parking brake device can be changed to a locking mode by means of the activated triggering apparatus (16, 32),
the triggering apparatus (16, 32) which can be activated by means of the at least one activation signal (14) output by the control device (10),
wherein the parking brake device is designed in such a way that the parking brake device can be changed to its locking mode by means of the activated triggering apparatus (16, 32), so that the vehicle is locked in its current parking position by means of the parking brake device which is in its locking mode,
wherein the parking brake device has an adjustment element (24, 44), and wherein the adjustment element (24, 44) is arranged on the triggering apparatus (16, 32) in such a way that the adjustment element (24, 44) can be displaced from a starting position to an active position by activation of the triggering apparatus (16, 32) such that the parking brake device is in its locking mode when the adjustment element (24, 44) is in its active position, wherein the parking brake device comprises a movable pawl (26), a locking wheel (28) and at least one spring (30),
**characterized in that** the parking brake device has a pyrotechnic triggering apparatus (16, 32) as its triggering apparatus (16, 32), and **in that** the movable pawl (26) can be held in a waiting position spaced apart from the locking wheel (28) by means of the adjustment element (24) in its starting position against a force of the at least one spring (30), and wherein the movable pawl (26) can be forced by the force of the at least one spring (30) into a locking position against the locking wheel (28) with the adjustment element (24) in its active position, so that the parking brake device is in its locking mode.

2. Parking brake device according to Claim 1, wherein the control device (10) comprises an emergency energy storage device, and the electronic apparatus (12) is designed to output energy stored in the emergency energy storage device as the at least one activation signal to the triggering apparatus (16, 32) of the parking brake device.

3. Parking brake device according to Claim 1, wherein the electronic apparatus (12) is designed to output at least one switching signal (14) as the at least one activation signal (14) to at least one switch (18) of the triggering apparatus (16, 32) in such a way that the electronics (20, 34) of the triggering apparatus (16, 32) can be supplied with power from an energy storage device (22) of the triggering apparatus (16, 32) via the switch (18) switched by the at least one switching signal (14).

4. Parking brake device according to one of Claims 1 to 3, wherein the parking brake device is a parking lock or an electric parking brake.

## Revendications

1. Dispositif formant frein de stationnement pour un véhicule, comprenant :
un dispositif de commande (10), le dispositif de commande (10) comprenant une unité électronique (12) au moyen de laquelle, en cas de défaillance d'un système d'alimentation électrique d'un véhicule équipé du dispositif de commande (10) et du dispositif formant frein de stationnement, pendant une opération de stationnement du véhicule, au moins un signal d'activation (14) est apte à être émis vers une unité de déclenchement (16, 32) du dispositif formant frein de stationnement, en ce que l'unité de déclenchement (16, 32) est apte à être activée au moyen d'au moins un signal d'activation (14) et que le dispositif formant frein de stationnement est apte à être mis en mode d'arrêt au moyen de l'unité de déclenchement activée (16, 32),
l'unité de déclenchement (16, 32), qui est apte à être activée au moyen dudit au moins un signal d'activation (14) émis par le dispositif de commande (10),
le dispositif formant frein de stationnement étant conçu de telle sorte que le dispositif formant frein de stationnement est apte à être mis dans son mode de blocage au moyen de l'unité de déclenchement activée (16, 32), de sorte que le véhicule soit bloqué dans sa position de stationnement actuelle au moyen du dispositif formant frein de stationnement se trouvant dans son mode de blocage,
le dispositif formant frein de stationnement comprenant un élément de réglage (24, 44), et l'élément de réglage (24, 44) étant agencé sur l'unité de déclenchement (16, 32) de telle sorte que l'élément de réglage (24, 44) soit apte à être déplacé d'une position initiale à une position active au moyen d'une activation de l'unité de déclenchement (16, 32), en ce que le dispositif formant frein de stationnement se trouve dans son mode de blocage lorsque l'élément de réglage (24, 44) se trouve dans sa position active, le dispositif formant frein de stationnement comprenant un cliquet réglable (26), une roue de blocage (28) et au moins un ressort (30),
**caractérisé en ce que** le dispositif formant frein de stationnement comprend, en tant que son unité de déclenchement (16, 32), une unité de déclenchement pyrotechnique (16, 32) et **en ce que** le cliquet réglable (26) est apte à être maintenu dans une position d'attente à distance de la roue de blocage (28) au moyen de l'élément de réglage (24) se trouvant dans sa position initiale, à l'encontre de la force d'au moins un ressort (30), et le cliquet réglable (26) étant apte à, lorsque l'élément de réglage (24) est dans sa position active, être poussé par la force d'au moins un ressort (30) dans une position de blocage contre la roue de blocage (28) de telle sorte que le dispositif formant frein de stationnement se trouve dans son mode de blocage.

2. Dispositif formant frein de stationnement selon la revendication 1, dans lequel le dispositif de commande (10) comprend un accumulateur d'énergie de secours, et l'unité électronique (12) est conçue de manière à délivrer à l'unité de déclenchement (16, 32) du dispositif formant frein de stationnement une énergie stockée dans l'accumulateur d'énergie de secours en tant que ledit au moins un signal d'activation.

3. Dispositif formant frein de stationnement selon la revendication 1, dans lequel l'unité électronique (12) est conçue pour émettre au moins un signal de commutation (14) en tant que ledit au moins un signal d'activation (14) vers au moins un commutateur (18) de l'unité de déclenchement (16, 32), de sorte qu'un système électronique (20, 34) de l'unité de déclenchement (16, 32) puisse être alimenté en courant par un accumulateur d'énergie (22) de l'unité de déclenchement (16, 32) par l'intermédiaire de l'interrupteur (18) commuté au moyen dudit au moins un signal de commutation (14).

4. Dispositif formant frein de stationnement selon l'une des revendications 1 à 3, le dispositif formant frein de stationnement étant un système de blocage de stationnement ou un frein de stationnement électrique.
